# EUROPEAN PATENT APPLICATION

(11) **EP 4 668 933 A1**
(43) Date of publication of application: **24.12.2025**
(21) Application number: 24757114.4
(22) Date of filing: 07.02.2024
(51) Int. Cl.: H04W 72/04, H04W 56/00, H04L 5/00, H04L 5/14

(54) **OPERATION METHOD OF APPARATUS IN WIRELESS COMMUNICATION SYSTEM, AND APPARATUS USING SAME METHOD**

(30) Priority: 16.02.2023 KR 20230021046
(71) Applicant: LG Electronics Inc., Yeongdeungpo-gu Seoul 07336 (KR)
(72) Inventor: YOU, Hyangsun, Seoul 06772 (KR); KO, Hyunsoo, Seoul 06772 (KR)
(74) Representative: Plasseraud IP
(86) International application number: PCT/KR2024/001802
(87) International publication number: WO 2024/172385

(57) **Abstract**

Provided are an operation method of an apparatus in a wireless communication system, and the apparatus. The apparatus receives a first message configuring a specific downlink reception resource, receives a second message indicating full duplex (FD) time resources, and performs an FD operation on the basis of the first message and the second message. If the specific downlink reception resource is configured as an FD time resource by the second message, a terminal determines the specific downlink reception resource as a non-FD time resource in which the FD operation is not performed and operates accordingly.

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource. Half duplex (HD) operation differs in that only one of downlink reception and uplink transmission can be performed in a given time resource. For FD operation, i) some frequency resources in the same time resource can be allocated as downlink subbands and other some frequency resources as uplink subbands (this may be referred to as subband FD, or SBFD), or ii) frequency resources that can be used for both downlink reception and uplink transmission in the same time resource can be allocated (this may be referred to as spectrum shared FD, or SSFD).

In FD environments such as SBFD and SSFD, from a cell perspective, both downlink and uplink resources can exist for the same time resource. Therefore, the base station can perform uplink reception while transmitting downlink. When a base station transmits a synchronization signal/physical broadcast channel (SS/PBCH) in a time resource where the base station performs FD operation, the base station can perform uplink reception while transmitting the SS/PBCH.

From a user equipment (UE) perspective, there may be a case where a resource for receiving SS/PBCH is set to an FD time resource. For example, a resource for receiving SS/PBCH may be set to a first period, and an FD time resource may be set to a second period. In this case, since the first period and the second period can be set independently, some of the periodic resources for receiving SS/PBCH may be set as FD time resources. In addition, resources for receiving a specific control resource set (CORESET) or resources that should perform a specific measurement may be set as FD time resources.

In such cases, there is a problem of ambiguity between the base station and the UE because it is not clearly specified how the UE will actually operate in the resources set as FD time resources.

### DISCLOSURE

### TECHNICAL PROBLEM

The technical problem to be solved by the present disclosure is to provide a method of operating a device in a wireless communication system and a device using the method.

### TECHNICAL SOLUTION

A method of operating a device in a wireless communication system and a device using the method are provided. According to the method, a user equipment (UE) receives a first message configuring a specific downlink reception resource, receives a second message informing full duplex (FD) time resources and performs an FD operation based on the first message and the second message. Based on the specific downlink reception resource being configured as an FD time resource by the second message, the UE determines the specific downlink reception resource as a non-FD time resource that does not perform the FD operation.

In another aspect, a UE, apparatus, and computer-readable medium for executing the above method is provided.

In another aspect, a method of operating a base station and a base station using the method are provided. According to the operating method of the base station, the base station transmits a first message configuring a specific downlink reception resource to a user equipment (UE), transmits a second message informing full duplex (FD) time resources to the UE and performs an FD operation with the UE based on the first message and the second message. Based on the specific downlink reception resource being configured as an FD time resource by the second message, the base station does not perform the FD operation with the UE in the specific downlink reception resource.

### ADVANTAGEOUS EFFECTS

According to the method of the present disclosure, when an SBFD symbol can be periodically set and a specific downlink reception should be performed in the symbol (e.g., when an SS/PBCH is transmitted by a base station/network, when a CORESET #0 is transmitted, or when a signal for a specific measurement should be transmitted, etc.), the UE processes the symbol as a non-SBFD symbol and performs only a wideband downlink reception operation, thereby enabling the UE to stably perform reception of the SS/PBCH.

Additionally, it prevents ambiguity in operation between the base station and the UE.

### BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 shows examples of how to apply full duplex within an intra-carrier.
FIG. 13 shows an example in which a time resource operating in half duplex (HD) and a time resource operating in full duplex (FD) such as SBFD or SSFD exist together.
FIG. 14 shows examples of a first time resource, a second time resource, a first frequency resource and a second frequency resource.
FIG. 15 shows another example of a first time resource, a second time resource, a first frequency resource, and a second frequency resource.
FIG. 16 illustrates an operation method of a UE in a wireless communication system.
FIG. 17 shows an example in which the FD operation of a UE is restricted in downlink reception resources.
FIG. 18 illustrates a signaling process and operation method between a base station and a UE.
FIG. 19 illustrates a wireless device that can be applied the present specification.
FIG. 20 shows an example of a signal processing module structure.
FIG. 21 shows another example of the structure of a signal processing module in a transmission device.
FIG. 22 shows an example of a wireless communication device according to an implementation example of the present disclosure.
FIG. 23 shows an example of the processor 2000.
FIG. 24 shows an example of the processor 3000.
FIG. 25 shows another example of a wireless device.
FIG. 26 shows another example of a wireless device applied to the present specification.
FIG. 27 shows a hand-held device to which this specification applies is exemplified.
FIG. 28 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

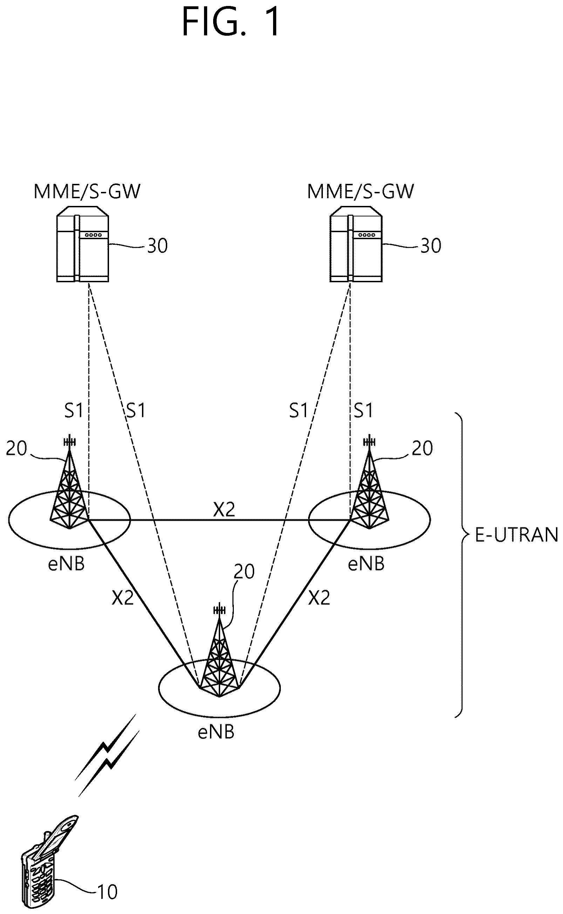

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

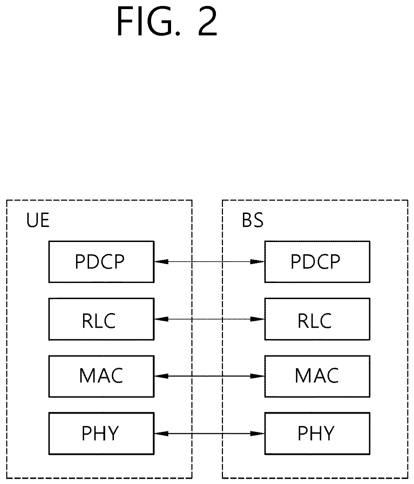

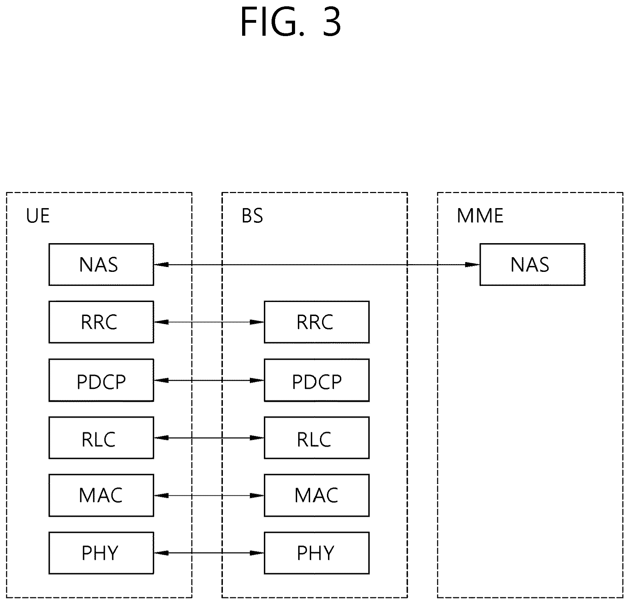

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is a higher layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

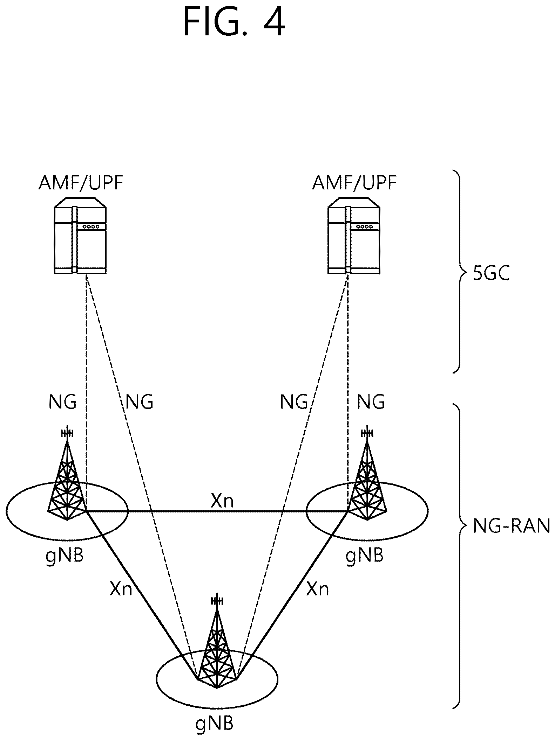

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

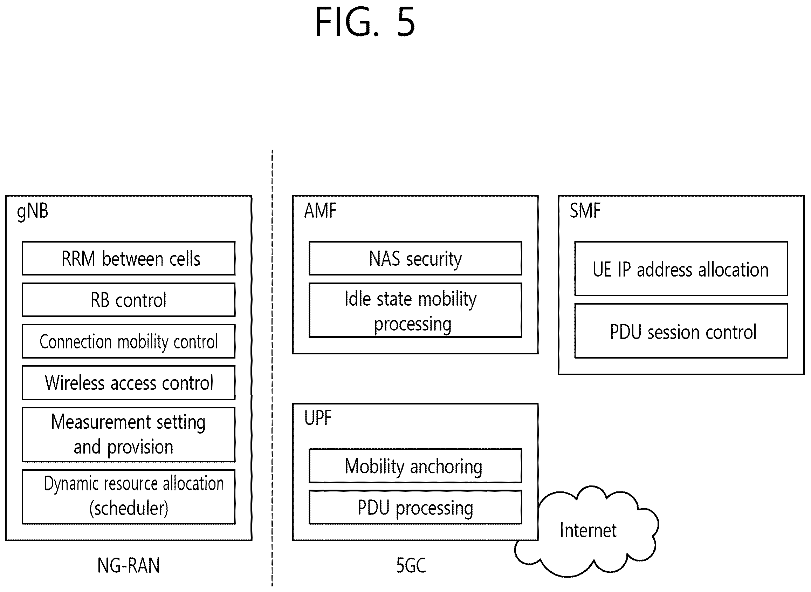

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

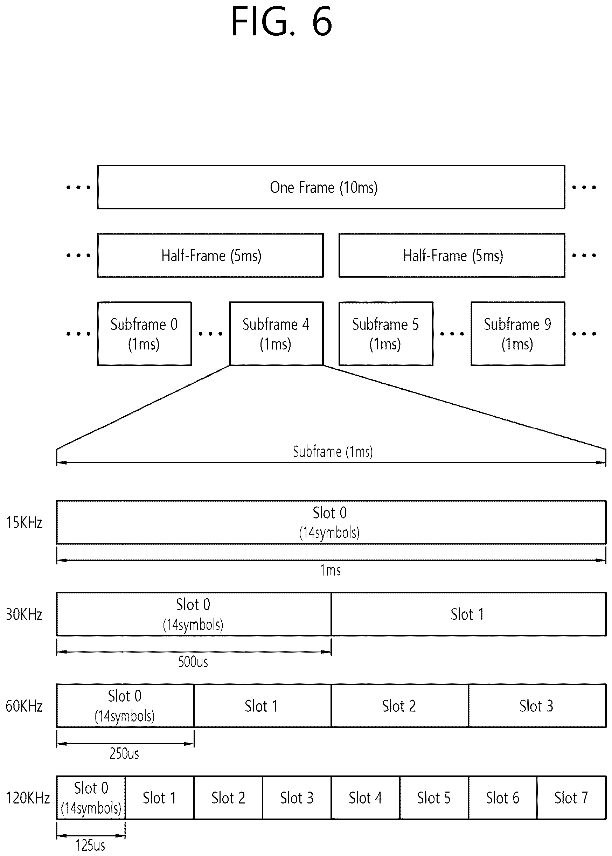

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration µ.

**[Table 1]**

| µ | Δf = 2^{µ}·15[kHz] | Cyclic prefix (CP) |
|---|---|---|
| 0 | 15 | Normal |
| 1 | 30 | Normal |
| 2 | 60 | Normal |
| | | Extended |
| 3 | 120 | Normal |
| 4 | 240 | Normal |

The following table 2 illustrates the number of slots in a frame (N^{frame,µ}ₛₗₒₜ), the number of slots in a subframe (N^{subframe'µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of µ=0, 1, 2, 3.

Table 2-1 below illustrates that the number of symbols per slot, the number of slots per frame, and the number of slots per subframe vary depending on the SCS, in case of using an extended CP.

**[Table 2-1]**

| SCS(15*2^{µ}) | N^{slot}_{symb} | N^{frame,µ}ₛₗₒₜ | N^{subframe,µ}ₛₗₒₜ |
|---|---|---|---|
| 60KHz (µ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

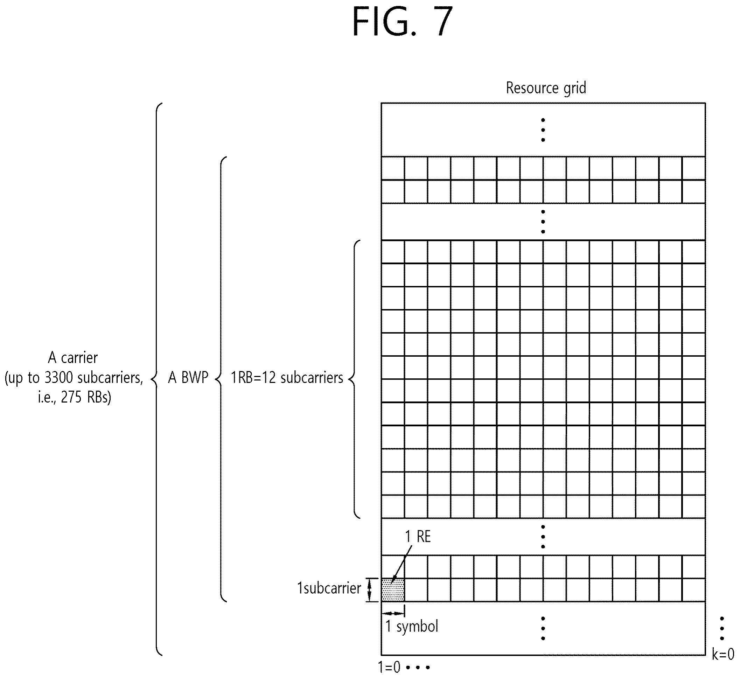

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

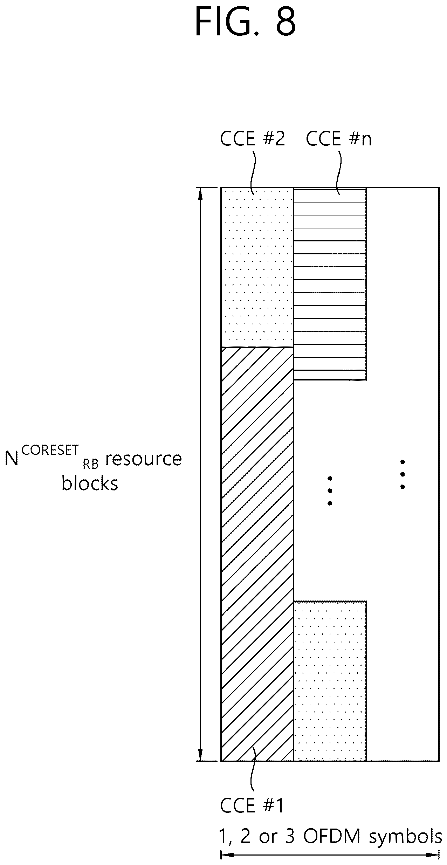

FIG. 8 illustrates CORESET.

Referring to FIG. 8, the CORESET includes N^{CORESET}_{RB} number of resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system BW used by a base station (BS). All the UEs, excluding some (e.g., eMTC/NB-IoT UE) supporting only a narrow band, shall be able to receive wireless signals of the entire system BW of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system BW.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

### <Self-contained subframe structure>

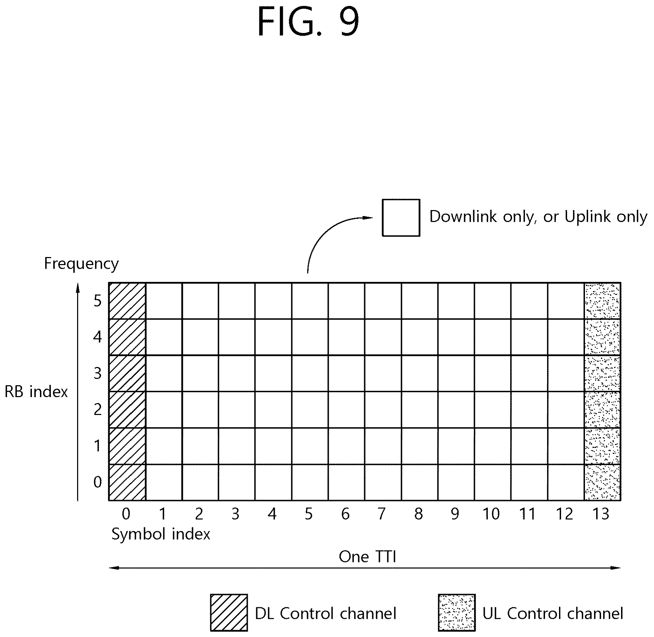

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

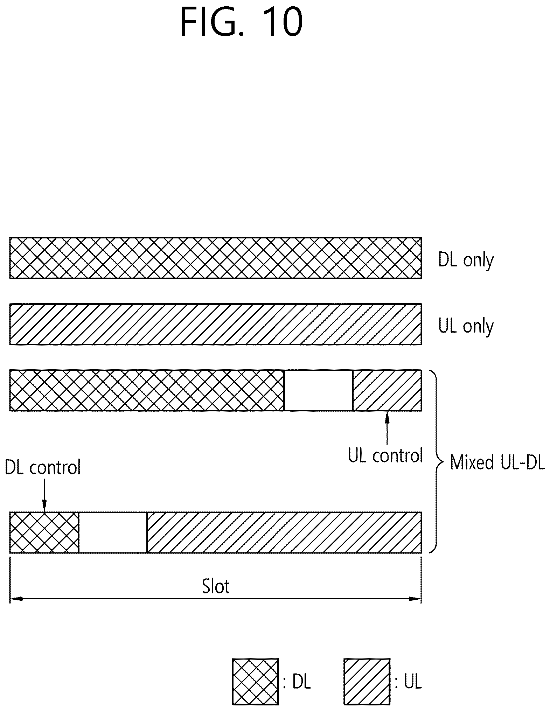

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.
1. DL only configuration,
2. UL only configuration,
3. Mixed UL-DL configuration:
   DL region + Guard period (GP) + UL control region,
   DL control region + GP + UL region.
   DL region: (i) DL data region, (ii) DL control region + DL data region.
   UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH related with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process related with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

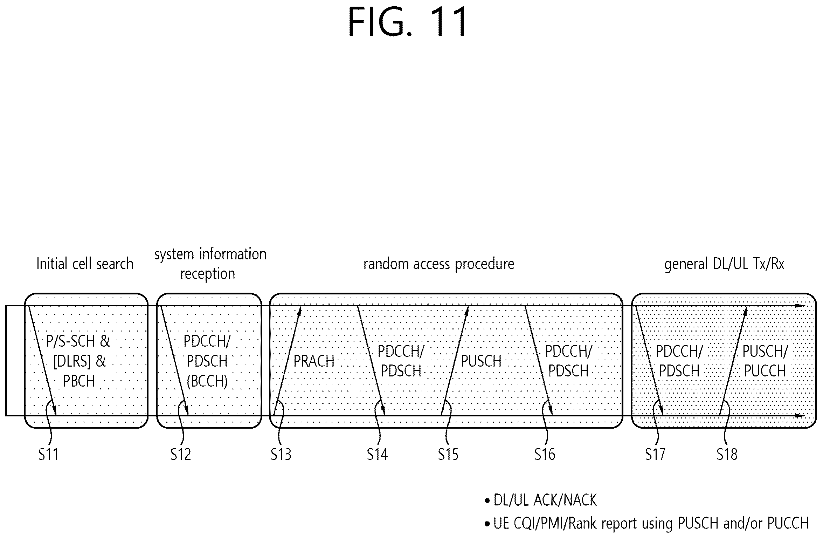

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.
- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

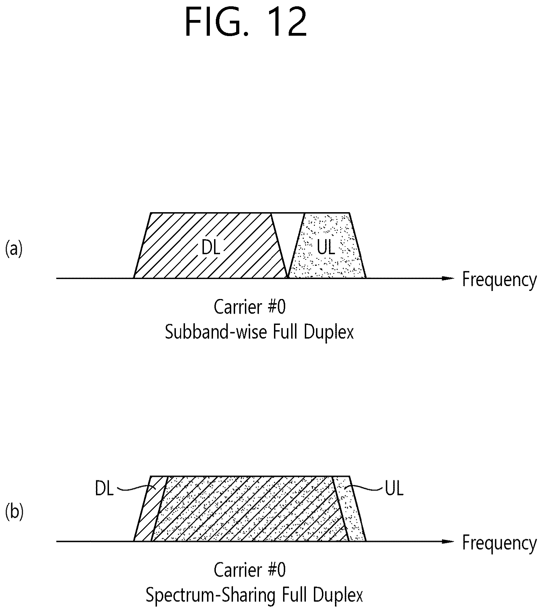

FIG. 12 shows examples of how to apply full duplex within an intra-carrier.

Referring to FIG. 12, the full duplex method includes subband-wise full duplex (hereinafter, it can be called subband full duplex or SBFD) as shown in (a) of FIG. 12 and spectrum sharing full duplex (hereinafter, it can be called SSFD) as shown in (b) of FIG. 12 may be considered.

In the case of SBFD, DL and UL are transmitted and received through different frequency resources within the same carrier (e.g., carrier #0). That is, different frequency resources are used in DL and UL for the same time resource.

In the case of SSFD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

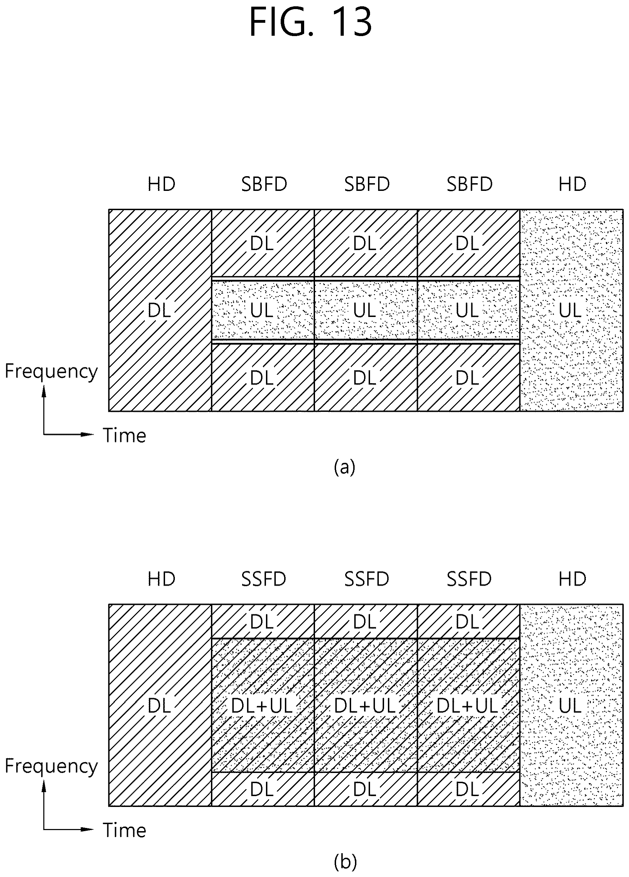

FIG. 13 shows an example in which a time resource operating in half duplex (HD) and a time resource operating in full duplex (FD) such as SBFD or SSFD exist together.

In (a) of FIG. 13, some time resources operating as SBFD are indicated as SBFD, and time resources operating as HD are indicated as HD. In (b) of FIG. 13, some time resources operating as SSFD are indicated as SSFD, and time resources operating as HD are indicated as HD. The unit of time resource may be, for example, a slot or symbol.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SBFD and a slot resource that operate as SSFD are referred to as a SBFD slot and a SSFD slot, respectively. The SBFD slot and the SSFD slot are also collectively referred to as FD slots.

In the present disclosure, in time resources operating as FD, among all frequency resources, frequency resources operating as DL may be referred to as a DL subband, and frequency resources operating as UL may be referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on this discussion, the present disclosure describes a method for determining time/frequency resources for a UE to perform DL/UL operations in an SBFD symbol during intra-carrier full duplex operation.

In the following, the term network may be interpreted as gNB or CU/DU. Additionally, the term UE may be interpreted as MT (mobile terminal, mobile termination) of an IAB node or NCR-MT (MT of a network-controlled repeater).

### A. Characteristics of DL/UL time/frequency resources for SBFD and SSFD operation

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system BW of the cell, and performs UL operations through all or part of the frequency resources (second frequency resources).

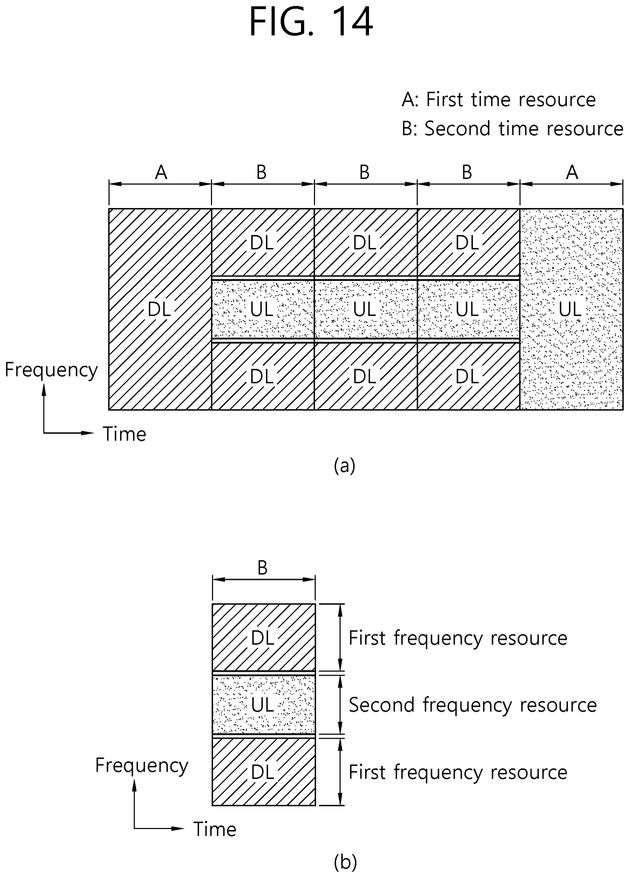

FIG. 14 shows examples of a first time resource, a second time resource, a first frequency resource, and a second frequency resource.

Referring to (a) of FIG. 14, in the first time resource (represented by A), the device is operated in HD. In the second time resource (represented by B), for example, the device may be operated as SBFD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

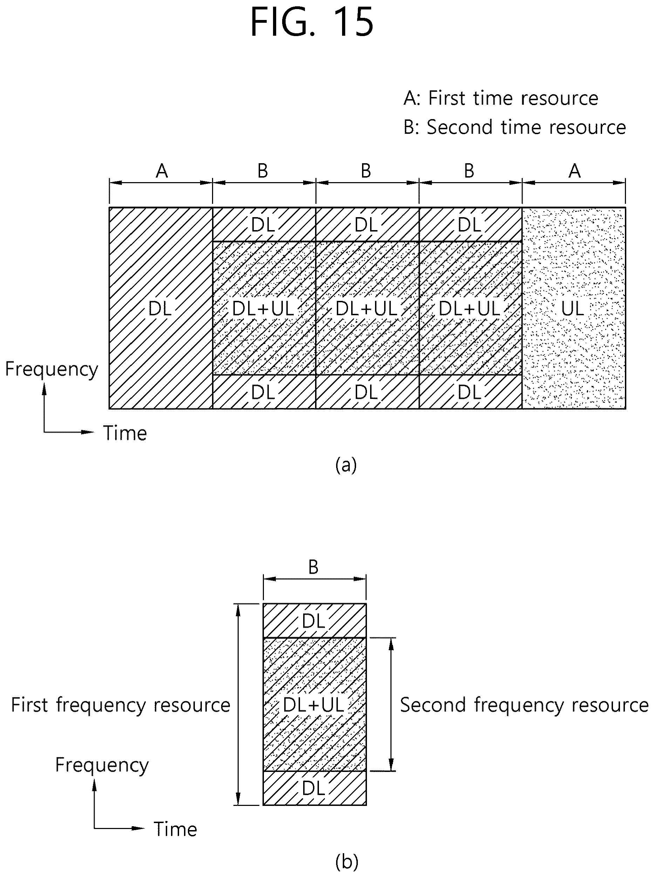

FIG. 15 shows another example of a first time resource, a second time resource, a first frequency resource, and a second frequency resource.

Referring to (a) of FIG. 15, in the first time resource (denoted by A), the device operates as a half-duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 15, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.
1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.
2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.
3) When performing an SBFD operation, the second frequency resource may be composed of contiguous frequency resources, and the first frequency resource may be composed of non-contiguous frequency resources. At this time, the first frequency resource may be composed of a plurality of non-contiguous sets (for example, two), and each set may be composed of contiguous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of multiple (e.g., two) non-contiguous sets and each set may be composed of contiguous frequency resources. This is to reduce interference from DL transmission on UL resources in adjacent carriers by placing the second frequency resource used for DL at the center of the frequency resources constituting the cell.
4) When performing SSFD operation, the second frequency resource may be composed of some frequency resources of the first frequency resource. At this time, the second frequency resource may be configured to have fewer X physical resource blocks (PRBs) on one or both edges of a carrier than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE.

For the FD (SBFD and/or SSFD) operation of the cell, the UE may determine information about the time resources (hereinafter referred to as SBFD symbols) that operate as SBFD (and/or SSFD). For this purpose, information about the SBFD symbol may be set to the UE from the network.

When a specific time resource is configured as a time resource operating in SBFD (SBFD symbol), both DL and UL resources may exist in that time resource. In this case, if there is no UL signal for the base station to receive in that time resource, the base station may only perform DL transmissions. In SBFD resources, DL transmission is only within the DL subband. Therefore, even if there is no UL signal transmitted in the UL subband, DL transmission may only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbols, it may consider a fallback to TDD operation where DL or UL operation is performed over the full band, rather than SBFD operation over DL/UL subbands.

The UE can perform the same TDD operation (half duplex operation) as an existing UE in resources that are not determined to be SBFD symbols. That is, only DL or UL operations can be performed using all frequency resources of the cell.

In the present disclosure, a time resource operating as SBFD or an SBFD symbol may mean a 'second time resource'. In addition, in the present disclosure, a time resource operating as TDD, a time resource operating as HD, a TDD symbol, or an HD symbol may mean a 'first time resource'.

The DL subband mentioned in the present disclosure may mean the 'first frequency resource'. In addition, the UL subband mentioned in the present disclosure may mean the 'second frequency resource'.

The present disclosure assumes SBFD operation where a cell performs DL and UL simultaneously using different frequency resources (e.g., subbands) in the same time resource. However, the contents of the present disclosure can also be applied when a cell performs SS-FD operation.

The present disclosure may include the following UE operations.

When a UE performs DL reception in an SBFD symbol, i) the UE can perform DL reception using frequency resources within a DL subband. The UE can perform DL reception using frequency resources within a DL subband within a DL BWP. ii) the UE does not perform DL reception in frequency resources other than the DL subband. The UE does not perform DL reception using frequency resources other than the DL subband within the DL BWP.

When a UE performs UL transmission in an SBFD symbol, i) the UE can perform UL transmission using frequency resources within a UL subband. The UE can perform UL transmission using frequency resources within a UL subband within a UL BWP. ii) the UE does not perform UL transmission in frequency resources other than a UL subband. The UE does not perform UL transmission using frequency resources other than a UL subband within a UL BWP.

In general, a UE can perform DL reception within a DL subband and UL transmission within a UL subband in a time resource where the UE determines that the cell operates in SBFD. However, if a gNB (base station) performs only DL transmission or UL reception in a time resource where the UE determines that the cell operates in SBFD, or if necessary, it may consider performing DL transmission or UL reception (capable of scheduling DL or UL) over the entire bandwidth.

In the following, it is assumed the SBFD operation where a cell performs DL and UL simultaneously using different frequency resources (e.g., subbands) in the same time resource. However, the contents of the present disclosure can also be applied when a cell performs SS-FD operation.

A UE can be provided with slot configuration information for multiple slot resources by tdd-UL-DL-ConfigurationCommon. The slot configuration information may be information indicating whether each symbol in a slot is a DL symbol or a UL symbol. Through the slot configuration information, a specific symbol may be configured as DL or UL, or may not be configured as DL or UL (in this case, the symbol may be interpreted as a flexible (F) symbol).

The following table shows an example of tdd-UL-DL-ConfigurationCommon. tdd-UL-DL-ConfigurationCommon (TDD-UL-DL-ConfigCommon) is an information element (IE) that determines cell-specific uplink/downlink TDD configuration.

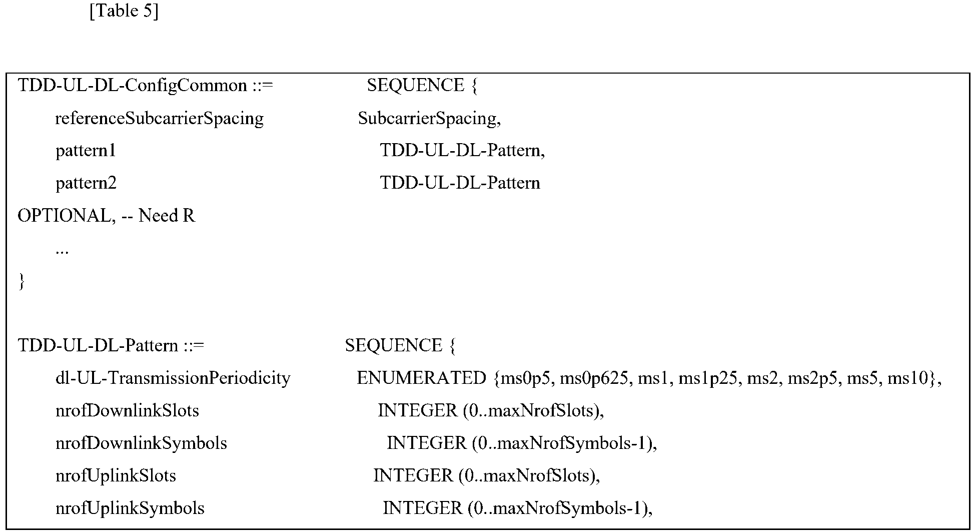

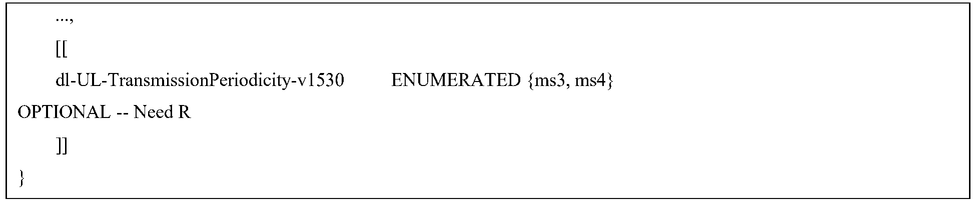

'dl-UL-TransmissionPeriodicity' indicates the period of the DL-UL pattern.

'nrofDownlinkSlots' indicates the number of consecutive full DL slots at the start of each DL-UL pattern. A full DL slot may be a slot where all symbols in the slot are downlink symbols.

'nrofDownlinkSymbols' means the number of consecutive downlink symbols at the beginning of the slot following the last full DL slot derived by 'nrofDownlinkSlots'. If the value of this field is 0, it indicates that there is no partial DL slot. A partial DL slot may mean a slot in which only some of the symbols in the slot are downlink symbols.

'nrofUplinkSlots' indicates the number of consecutive full UL slots at the end of each DL-UL pattern. A full UL slot may be a slot where all symbols in the slot are uplink symbols.

'nrofUplinkSymbols' means the number of consecutive UL symbols at the end of the slot preceding the first full UL slot derived by 'nrofUplinkSlots'. If the value of this field is 0, it indicates that there is no partial UL slot. A partial UL slot may mean a slot in which only some of the symbols in the slot are uplink symbols.

The above-described information can be an example of slot configuration information. Through this, the UE can determine whether each symbol in the slot is a DL symbol, a UL symbol, or an F symbol.

In this disclosure, a symbol configured as DL by tdd-UL-DL-ConfigurationCommon is called a cell-specific DL symbol. A symbol configured as UL by tdd-UL-DL-ConfigurationCommon is called a cell-specific UL symbol. A symbol that is not configured as DL or UL by tdd-UL-DL-ConfigurationCommon is called a cell-specific F symbol.

The UE can be configured to DL or UL by tdd-UL-DL-ConfigurationDedicated (TDD-UL-DL-ConfigDedicated) for cell-specific F symbols. tdd-UL-DL-ConfigurationDedicated is an information element that determines UE-specific uplink/downlink TDD configuration.

When a cell-specific F symbol is configured as DL by tdd-UL-DL-ConfigurationDedicated, the UE determines the symbol as a DL symbol. The UE determines that the DL symbol can be used for DL reception and is not used for UL transmission.

When a cell-specific F symbol is configured as UL by tdd-UL-DL-ConfigurationDedicated, the UE considers the symbol as a UL symbol. The UE considers that the UL symbol is not used for DL reception, but can be used for UL transmission.

If a cell-specific F symbol is not configured as DL or UL by tdd-UL-DL-ConfigurationDedicated, the UE determines the symbol as a flexible (F) symbol. The UE determines that the F symbol can be used for DL reception or UL transmission through signaling/scheduling, etc. in the future.

The following table is an example of tdd-UL-DL-ConfigurationDedicated.

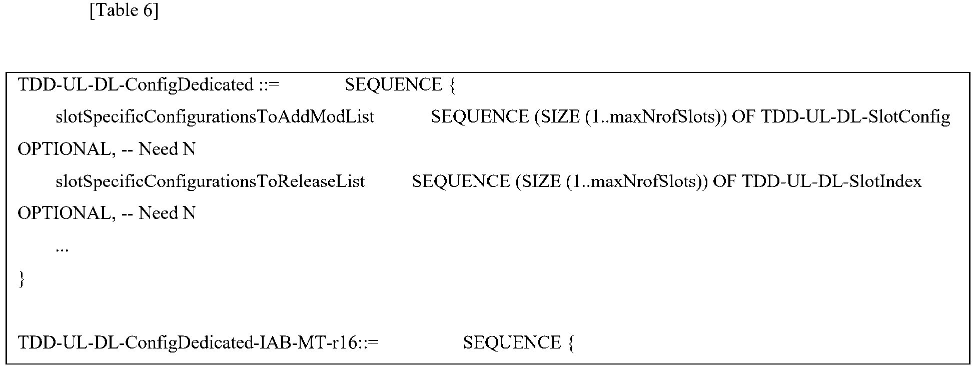

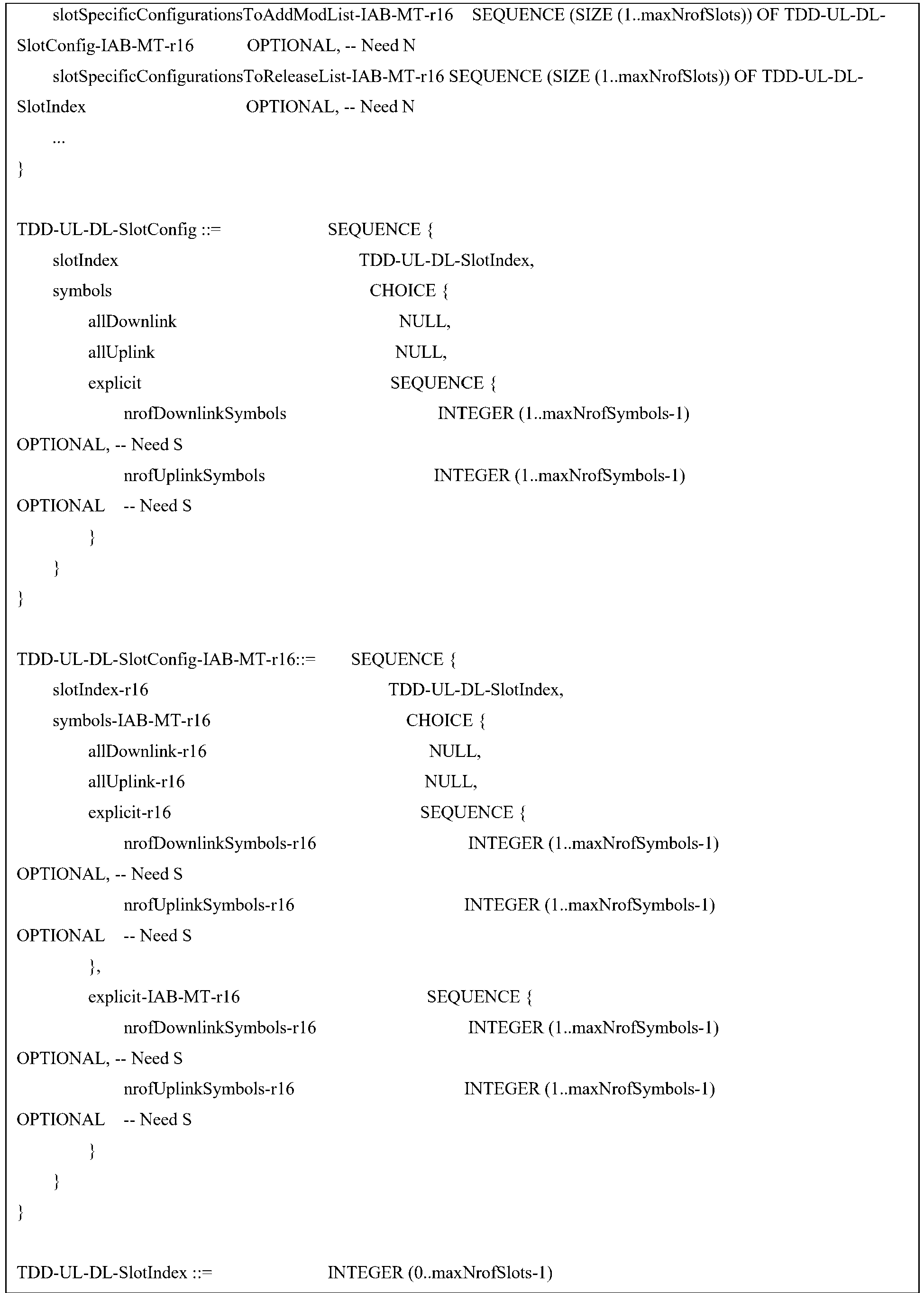

'nrofDownlinkSymbols' indicates the number of consecutive DL symbols at the beginning of the slot identified by 'slotIndex'. If this field is absent, the UE can assume that there are no leading DL symbols.

'nrofUplinkSymbols' indicates the number of consecutive UL symbols at the end of the slot identified by 'slotIndex'. If this field is absent, the UE can assume that there are no trailing UL symbols.

'slotIndex' is a field that identifies a slot within the slot configuration period given in tdd-UL-DL-configurationCommon.

'symbols' indicates the direction (downlink or uplink) of the symbols in the slot. 'allDownlink' indicates that all symbols in this slot are used for downlink, and 'allUplink' indicates that all symbols in this slot are used for uplink. 'explicit' explicitly indicates the number of symbols allocated to downlink and uplink at the beginning and end of this slot, respectively.

The UE can determine the direction (DL, UL, F) of symbols within a slot based on the aforementioned TDD configuration message (e.g., at least one of tdd-UL-DL-ConfigurationCommon and tdd-UL-DL-ConfigurationDedicated).

Meanwhile, the UE may receive an FD configuration message indicating full duplex time resources from the network. For example, the UE can receive SBFD symbol information indicating an SBFD symbol from the network. From this, the UE can determine a specific symbol as an SBFD symbol or a non-SBFD symbol. The FD configuration message can be included in the aforementioned TDD configuration message or provided as a separate message.

If the UE determines that a specific symbol is a non-SBFD symbol, the UE determines that a legacy operation is to be performed on that symbol.

When a specific symbol is determined to be an SBFD symbol, the UE determines that the symbol is a symbol that can perform an SBFD operation from the cell perspective.

If the UE does not receive configuration information for SBFD symbols from the network, 1) it can determine that all symbols are non-SBFD symbols. Therefore, the UE can operate like legacy TDD in all symbols.

Or if the UE does not receive configuration information for SBFD symbols from the network, 2) the UE may determine all symbols as SBFD symbols.

When a UE determines that a specific symbol is an SBFD symbol, the UE can perform DL reception within a DL subband and UL transmission within a UL subband in the time resource in which the UE determines that the cell operates in SBFD. Additionally, in a time resource where the cell is determined to operate in SBFD, the gNB (meaning base station or network, hereinafter the same) may perform only DL transmission or UL reception, or may consider performing DL transmission or UL reception (capable of receiving DL or UL scheduling) over the entire bandwidth as needed.

That is, all or part of the cell-specific DL symbols and/or cell-specific F symbols can be configured as SBFD symbols, in which case the UE may perform DL reception or UL transmission operation (i.e., half-duplex (HD) operation) over the entire bandwidth in the resources configured as SBFD symbols.

For this purpose, when a cell-specific DL symbol is configured/determined as an SBFD symbol, the UE can determine whether DL/UL operation is performed on the corresponding symbol as follows.

1) If a cell-specific DL symbol (a symbol configured as DL by tdd-UL-DL-ConfigurationCommon) is configured/determined as an SBFD symbol, the UE can operate in DL or UL in that symbol.

2) For a cell-specific DL symbol, i) if it is indicated as DL by tdd-UL-DL-ConfigurationDedicated, the UE determines the symbol as a DL symbol. The UE determines that the symbol is used for DL reception and not for UL transmission. ii) If indicated as UL by tdd-UL-DL-ConfigurationDedicated, the UE determines the symbol as a UL symbol. The UE determines that the symbol is used for UL transmission and not for DL reception. iii) If it is not indicated as DL or UL by tdd-UL-DL-ConfigurationDedicated, the UE determines that the symbol is a flexible (F) symbol. Or, if tdd-UL-DL-ConfigurationDedicated is not set, the UE determines the symbol as an F symbol. The UE determines that the symbol can be used for DL reception or UL transmission through signaling/scheduling, etc. in the future.

The UE can determine the UL subband and DL subband based on the network configurations.
1) The UE is configured with information about UL subbands and DL subbands from the network, and can determine frequency resources constituting the UL subbands and DL subbands from this.
2) Or, the UE may be configured with only information about the UL subband from the network and determine the frequency resources constituting the UL subband from this. In this case, the remaining frequency resources, excluding the frequency resources configured/determined as UL subbands within the frequency resources constituting the system bandwidth, can be determined as DL subbands. Additionally, if the UE is configured with a frequency resource constituting a guard subband, the remaining frequency resources, excluding the frequency resources configured/determined as UL subbands and guard subbands within the frequency resources constituting the system BW, can be determined as DL subbands.
3) Or, the UE may be configured with only information about the DL subband from the network and determine the frequency resources constituting the DL subband from this. In this case, the remaining frequency resources, excluding the frequency resources configured/determined as DL subbands within the frequency resources constituting the system bandwidth, can be determined as UL subbands. Additionally, if the UE is configured as frequency resources constituting the guard subband, the remaining frequency resources, excluding the frequency resources configured/determined as DL subbands and guard subbands within the frequency resources constituting the system bandwidth, can be determined as UL subbands.

### <Section 5.0. Possible UE Operations in SBFD Symbols>

In this section, it is proposed/described the operations that a UE can perform on symbols configured/determined as FD time resources (e.g., SBFD symbols).

In a symbol configured/determined as an SBFD symbol based on a configuration from the network (e.g., a TDD configuration message and/or an FD configuration message), the UE may operate in DL or UL. Alternatively, in a symbol configured/determined as an SBFD symbol, the UE may perform DL or UL operation in a subband or wideband.

That is, even if a specific time resource is indicated by the network as an SBFD symbol, the UE can operate in subband DL and subband UL in that time resource, or perform only DL operation (DL only) and/or only UL operation (UL only) according to the indication or agreement.

More specifically, the UE may perform one operation among {DL only, subband DL, UL only, subband UL} in a symbol configured/determined as an SBFD symbol. Alternatively, the UE may perform one operation among {DL only, subband DL, subband UL} in a symbol configured/determined as an SBFD symbol.

At this time, DL only, subband DL, UL only, and subband UL can mean the following operations, respectively.

DL only (this may be called wideband DL operation): The UE performs DL reception, and the UE can perform DL reception in the entire frequency resources constituting the system bandwidth. More specifically, the UE can perform DL reception in DL BWP resources within the entire frequency resources constituting the system bandwidth. This corresponds to the HD operation among the full duplex (FD) operation and the half duplex (HD) operation, and may be called more specifically the HD DL operation.

Subband DL operation: The UE performs DL reception, and the UE can perform DL reception in frequency resources within the DL subband. More specifically, DL reception can be performed in frequency resources included in both the DL subband and the DL BWP. This corresponds to the FD operation among the FD operation and the HD operation, and can be more specifically called the FD DL operation.

UL only (this may be called wideband UL operation): The UE performs UL transmission, and UL transmission can be performed in the entire frequency resources within the system bandwidth. More specifically, UL transmission can be performed in UL BWP resources within the entire frequency resources constituting the system bandwidth. This corresponds to the HD operation among the FD operation and HD operation, and may be called HD UL operation more specifically.

Subband UL operation: The UE performs UL transmission, and the UE can perform UL transmission in frequency resources within the UL subband. More specifically, UL transmission can be performed in frequency resources included in both the UL subband and the UL BWP. This corresponds to the FD operation among the FD operation and the HD operation, and can be more specifically called the FD UL operation.

At this time, for symbols configured/determined as SBFD symbols, the operations that the UE can perform can be determined differently depending on the TDD UL/DL configuration information (TDD configuration message).

For example, the operations that a UE can perform can be determined differently depending on the tdd-UL-DL-ConfigurationCommon information in a symbol configured/determined as an SBFD symbol.

For a symbol set/determined as an SBFD symbol, if the symbol is configured as DL by tdd-UL-DL-ConfigurationCommon (i.e., if it is a cell-specific DL symbol), i) when the UE performs DL reception in the symbol, it can perform a wideband DL operation or a subband DL operation (this can also be expressed as performing an HD DL operation or an FD DL operation, the same applies hereinafter). This is to allow the entire bandwidth to be used for DL in a specific symbol as needed, such as for improving DL throughput, even though the specific symbol is configured as an SBFD symbol.

ii) When the UE performs UL transmission in the corresponding symbol, it can perform subband UL operation (this can also be expressed as performing FD UL operation; the same applies hereinafter). In the case of cell-specific DL symbols, it is not desirable to perform UL operation in the entire bandwidth since cells located in adjacent bands are also symbols that operate as DL.

For a symbol set/determined as an SBFD symbol, if the symbol is not configured as DL or UL by tdd-UL-DL-ConfigurationCommon (i.e., if it is a cell-specific F symbol), at least one of the following options may be applied.

### Option 1.

When the UE performs DL reception in the corresponding symbol, it can perform wideband DL operation or subband DL operation. This is to allow the entire bandwidth to be used for DL in a specific symbol when necessary, such as for improving DL throughput, even though the specific symbol is configured as an SBFD symbol.

When a UE performs UL transmission in a corresponding symbol, it can perform wideband UL operation or subband UL operation. This is to allow the entire bandwidth to be used for UL in a specific symbol when necessary, such as for improving UL throughput, even though the specific symbol is configured as an SBFD symbol.

### Option 2.

When the UE performs DL reception in the corresponding symbol, it can perform wideband DL operation or subband DL operation. This is to allow the entire bandwidth to be used for DL as needed, such as for improving DL throughput, in the specific symbol, even though the specific symbol is configured as an SBFD symbol.

When a UE performs UL transmission in the corresponding symbol, it can only perform subband UL operation. That is, it cannot perform wideband UL operation. This is because, in general, when a cell supports SBFD operation, there is an effect of improving UL throughput and coverage, so there is no need to additionally improve UL throughput by allowing the entire bandwidth to be used for UL.

### Option 3.

When a UE performs DL reception in the corresponding symbol, it can only perform subband DL operation. That is, it cannot perform wideband DL operation.

When a UE performs UL transmission in a corresponding symbol, it can perform a wideband UL operation or a subband UL operation (this can also be expressed as performing an HD UL operation or an FD UL operation, the same applies hereinafter).

Depending on the embodiment, for a symbol configured/determined as an SBFD symbol, the operation that the UE can perform may be determined differently depending on the tdd-UL-DL-ConfigurationCommon and tdd-UL-DL-ConfigurationDedicated information.
1) For a symbol configured/determined as an SBFD symbol, if the symbol is configured/determined as a DL symbol by the tdd-UL-DL-ConfigurationCommon and tdd-UL-DL-ConfigurationDedicated information, i) when the UE performs DL reception in the symbol, it can perform either a wideband DL operation or a subband DL operation. ii) when the UE performs UL transmission in the symbol, it can perform only a subband UL operation.
2) For a symbol set/determined as an SBFD symbol, if the symbol is determined as an F symbol by the tdd-UL-DL-ConfigurationCommon and tdd-UL-DL-ConfigurationDedicated information, at least one of the following options can be applied.

### Option 1.

When a UE performs DL reception in a corresponding symbol, it can perform either a wideband DL operation or a subband DL operation.

When a UE performs UL transmission in a corresponding symbol, it can perform a wideband UL operation or a subband UL operation (this can also be expressed as performing an HD UL operation or an FD UL operation, the same applies hereinafter).

### Option 2.

When a UE performs DL reception in a corresponding symbol, it can perform either a wideband DL operation or a subband DL operation.

When a UE performs UL transmission in a corresponding symbol, it can only perform subband UL operation. That is, it cannot perform wideband UL operation.

### Option 3.

When a UE performs DL reception on a corresponding symbol, it can only perform subband DL operations. That is, it cannot perform wideband DL operations.

When a UE performs UL transmission in a corresponding symbol, it can perform either wideband UL operation or subband UL operation.

### <Section 5.1. Restrictions on SBFD operation of UEs in DL reception resources >

If the symbol through which SS/PBCH is transmitted is set/operated as an SBFD symbol, UE #2 can perform UL transmission while UE #1 receives SS/PBCH. In this case, the UL signal transmitted by UE #2 may act as interference when UE #1 receives SS/PBCH. Therefore, in order for the UE to perform measurement stably, the SBFD operation in the resource through which SS/PBCH is transmitted needs to be restricted.

Similarly, SBFD operation needs to be restricted on symbols where CORESET#0 is transmitted.

The SBFD operation needs to be restricted to ensure that the UE can perform measurements stably even during the time duration for the UE to perform measurements (especially L3 measurements).

Against this background, the present disclosure proposes to restrict the SBFD operation of a UE on the following specific DL reception resources. The specific DL reception resources may include at least one of the following resources.
1) The symbol in which the SS/PBCH block is transmitted.
2) The symbol designated as CORESET#0.
3) The time duration for performing L3 measurement, for example, i) the symbol/time resource set by SMTC (SSB-based RRM Measurement Timing Configuration), ii) the symbol/time resource set as the measurement gap.

For symbols included in DL reception resources to which the SBFD operation of the UE is restricted as described above or symbols within a slot including the DL reception resources, the UE may operate according to at least one of the following methods.

### Method 1.

The UE can determine that the symbol is a symbol that does not operate as SBFD (hereinafter referred to as a non-SBFD symbol) even if the symbol is set as an SBFD symbol by the network configurations. Therefore, the UE can operate in such a symbol as in the existing TDD.

### Method 2.

The UE determines that, for a given symbol, it performs only DL operation if the symbol is set as an SBFD symbol by network configurations. To this end, at least one of the following Alt a to Alt c may be used.

Alt a. The UE determines that it always performs only DL operations, regardless of the UE's operation indicated for the symbol, and can only perform DL operations.

Alt b. The UE assumes that no subband DL operation, wideband UL operation, or subband UL operation is indicated from the network for the corresponding symbol.

Alt c. The UE does not perform UL transmission in the symbol if wideband UL operation or subband UL operation is indicated for the symbol, or if it determines that UL operation is to be performed. When a UE is indicated to perform a wideband DL operation or a subband DL operation for a given symbol, or determines that a DL operation is to be performed, the UE determines that a wideband DL operation is to be performed and performs the wideband DL operation.

### Method 3.

The UE determines that it performs only the subband DL operation or the wideband DL operation for the corresponding symbol, if the symbol is set as an SBFD symbol by the network configurations. To this end, at least one of the following Alt a to Alt c may be used.

Alt a. The UE may determine that it performs only wideband DL operation or subband DL operation in the given symbol.

Additionally, if it is indicated to perform a wideband operation, the UE determines that it will perform a wideband DL operation in the corresponding symbol and operates. If it is indicated to perform a subband operation, the UE determines that it will perform a subband DL operation in the corresponding symbol and operates.

Or, additionally, if wideband UL operation is indicated, the UE determines that wideband DL operation is performed in the corresponding symbol and operates. If subband UL operation is indicated, the UE determines that subband DL operation is performed in the corresponding symbol and operates.

Alt b. The UE assumes that the network does not instruct the UE to perform wideband UL operation or subband UL operation for the corresponding symbol. Or, the UE determines that the corresponding symbol is not indicated to operate in UL.

Alt c. The UE does not perform UL transmission in the symbol if wideband UL operation or subband UL operation is indicated in the symbol, or if it determines that UL operation is to be performed.

Additionally, for symbols included in DL reception resources that restricts the SBFD operation of the UE as described above, the UE determines that the symbols cannot operate as UL for the following N symbols. Or, for a symbol included in a DL reception resource to which the SBFD operation of the UE is restricted as described above, the UE determines that the symbols after the subsequent N symbols can operate as UL.

To this end, specifically, for the N subsequent symbols following the symbols included in the DL reception resources to which the SBFD operation of the UE is restricted as described above, the following operation can be performed.

### Method 1.

The UE determines that the symbols perform only subband DL operation or wideband DL operation.

Additionally, if it is indicated to perform a wideband operation, the UE determines that it will perform a wideband DL operation in the corresponding symbol, and if it is indicated to perform a subband operation, the UE determines that it will perform a subband DL operation in the corresponding symbol.

Or, additionally, if a wideband UL operation is indicated, the UE determines that it will perform a wideband DL operation in the corresponding symbol, and if a subband UL operation is indicated to be performed, the UE determines that it will perform a subband DL operation in the corresponding symbol.

Based on the above determination, the UE performs a subband DL operation or a wideband DL operation on the corresponding symbol.

### Method 2.

The UE assumes that the symbols are not indicated by the network to perform wideband UL operation or subband UL operation. Or, the UE determines that the symbols are not indicated to perform UL operation.

Based on the above determination, the UE performs a subband DL operation or a wideband DL operation on the corresponding symbol.

### Method 3.

The UE does not perform UL transmission in the symbol if wideband UL operation or subband UL operation is indicated in the symbol, or if it determines that UL operation is to be performed.

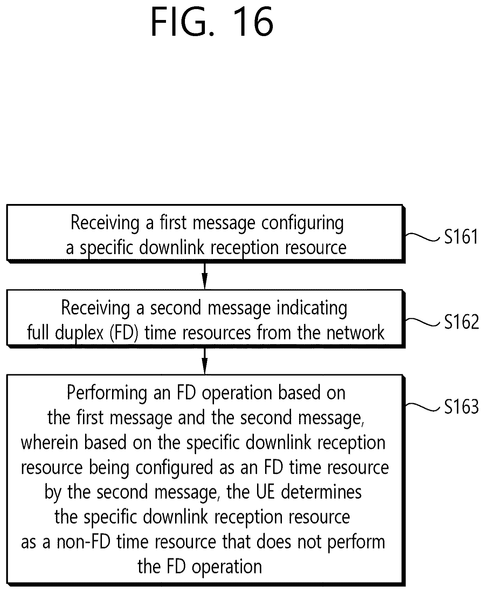

FIG. 16 illustrates an operation method of a UE in a wireless communication system.

Referring to FIG. 16, a UE receives a first message configuring a specific downlink reception resource from a network (e.g., a base station) (S161).

Here, the specific downlink reception resource may be a symbol for receiving a synchronization signal/physical broadcast channel (SS/PBCH, which may also be referred to as an SS/PBCH block) (i.e., a symbol for transmitting an SS/PBCH from the base station's perspective).

In the time domain, an SS/PBCH block may be composed of four OFDM symbols numbered in increasing order from 0 to 3 within the SS/PBCH block, and the PSS, SSS and PBCH may be mapped to symbols as shown in Table 7, for example.

**[Table 7]**

| Channel or signal | OFDM symbol number *l* relative to the start of an SS/PBCH block |
|---|---|
| PSS | 0 |
| SSS | 2 |
| PBCH | 1, 3 |
| | 2 |
| DM-RS for PBCH | 1, 3 |
| | 2 |

The time domain positions of SS/PBCH blocks can be provided, for example, by 'ssb-PositionsInBurst'. Specifically, when operating in a licensed spectrum, ssb-PositionsInBurst indicates the time domain positions of SS blocks transmitted in a half frame in which an SS/PBCH block exists. ssb-PositionsInBurst may be provided in the form of a bitmap, where each bit corresponds to a SS/PBCH block index, such that the first bit (i.e., the leftmost bit) corresponds to SS/PBCH block index 0, the second bit corresponds to SS/PBCH block index 1, and so on. A value of 0 in the bitmap may indicate that the corresponding SS/PBCH block is not transmitted, and a value of 1 may indicate that the corresponding SS/PBCH block is transmitted.

For a half frame with an SS/PBCH block, the first symbol index of the candidate SS/PBCH block can be determined according to the subcarrier spacing (SCS) of the SS/PBCH block, where index 0 corresponds to the first symbol of the first slot of the half frame.

For example, if the SCS of the SS/PBCH block is 15 kHz, the index of the first symbol of the candidate SS/PBCH block can be {2,8}+14·n.

Specifically, when operating without shared spectrum channel access, n=0,1 for carrier frequencies equal to or less than 3 GHz, and n=0,1,2,3 for carrier frequencies within FR1 greater than 3 GHz. When operating with shared spectrum channel access, n=0,1,2,3,4.

For example, if the SCS of the SS/PBCH block is 30 kHz, the first symbol of the candidate SS/PBCH block may have the index {4,8,16,20}+28·n. For carrier frequencies equal to or less than 3 GHz, n=0, and for carrier frequencies within FR1 greater than 3 GHz, n=0,1.

Alternatively, if the SCS of the SS/PBCH block is 30 kHz, the first symbol of the candidate SS/PBCH block may have the index {2,8}+14·n. When operating without shared spectrum channel access, for paired spectrum operation, for carrier frequencies equal to or less than 3 GHz, n may be 0,1, and for carrier frequencies within FR1 greater than 3 GHz, n may be 0,1,2,3. For non-paired spectrum operation, for carrier frequencies less than 1.88 GHz, n=0,1, and for carrier frequencies within FR1 greater than or equal to 1.88 GHz, n=0,1,2,3. When operating with shared spectrum channel access, n=0,1,2,3,4,5,6,7,8,9.

Alternatively, if the SCS of the SS/PBCH block is 120 kHz, the first symbol of the candidate SS/PBCH block may have the index {4,8,16,20} +28 n. For carrier frequencies within FR2, n may be 0,1,2,3,5,6,7,8,10,11,12,13,15,16,17,18.

In a similar manner to the above example, the index of the first symbol of the candidate SS/PBCH block can also be determined for cases where the SCS of the SS/PBCH block is 240 kHz, 480 kHz, or 960 kHz.

In some embodiments, the specific downlink reception resource may be a symbol receiving CORESET #0.

CORESET#0 (which may be denoted as CORESET 0) is a special type of CORESET carrying PDCCH/DCI for SIB1. Resource allocation (i.e., time and frequency domain resource allocation) for CORESET#0 is configured by MIB (master information block, i.e., PBCH of SSB). Other types of CORESETs are configured by SIB or RRCSetup/RRCReconfiguration, but CORESET#0 should be known before SIB or other RRC messages are detected, and therefore cannot be configured by SIB or other RRC messages.

The frequency domain resource allocation (i.e., number of RBs) of CORESET#0 may have only two options, 24 or 48 RBs. The time domain resource allocation (i.e., number of OFDM symbols) of CORESET#0 may have only three options, 1, 2, or 3. The starting position of CORESET#0 in the frequency domain may be set based on the SSB position.

According to an embodiment, the specific downlink reception resource may be a symbol for performing a specific measurement. The specific downlink reception resource may be a time duration for performing L3 measurement, for example, i) a symbol/time resource set by SMTC (SSB-based RRM Measurement Timing Configuration), ii) a symbol/time resource set as a measurement gap.

The UE receives a second message from the network (base station) indicating full duplex (FD) time resources (S162).

The second message may be, for example, a configuration message indicating a symbol that can operate as SBFD, i.e., an SBFD symbol. According to an embodiment, some or all of the symbols set as downlink symbols or flexible symbols by the TDD configuration message may be set as SBFD symbols by the second message.

The second message may periodically set an FD time resource (e.g., an SBFD symbol). For example, the second message may set an FD time resource for each slot within a specific slot duration consisting of a plurality of slots.

The UE performs an FD operation based on the first message and the second message, wherein if the specific downlink reception resource is set as an FD time resource by the second message, the UE determines the specific downlink reception resource as a non-FD time resource that does not perform the FD operation (S163).

The FD operation includes at least one of i) a subband downlink reception operation capable of performing downlink reception in a downlink subband and ii) a subband uplink transmission operation capable of performing uplink transmission in an uplink subband.

The UE can perform a wideband downlink reception operation capable of performing downlink reception across the entire system bandwidth in the above non-FD time resources.

This can also be expressed that the UE does not expect to be indicated with respect to the non-FD time resource: i) a subband downlink reception operation capable of performing downlink reception in a downlink subband, ii) a subband uplink transmission operation capable of performing uplink transmission in an uplink subband, and iii) a wideband uplink transmission operation capable of performing uplink transmission in the entire system band.

Alternatively, it can be expressed that the UE always performs a wideband downlink reception operation capable of performing downlink reception over the entire system bandwidth, regardless of the operation indicated for the non-FD time resource.

In some embodiments, for the non-FD time resource, if i) a subband uplink transmission operation capable of performing uplink transmission in an uplink subband or ii) a wideband uplink transmission operation capable of performing uplink transmission in the entire system bandwidth is indicated, the UE may not perform uplink transmission (i.e., subband uplink transmission, wideband uplink transmission) in the non-FD time resource despite such indication.

In an embodiment, for the non-FD time resource, if a wideband downlink reception operation or a subband downlink reception operation capable of performing downlink reception in a downlink subband is indicated, the UE can perform the wideband downlink reception operation. That is, even if a subband downlink reception operation is indicated for the non-FD time resource, a wideband downlink reception operation is performed.

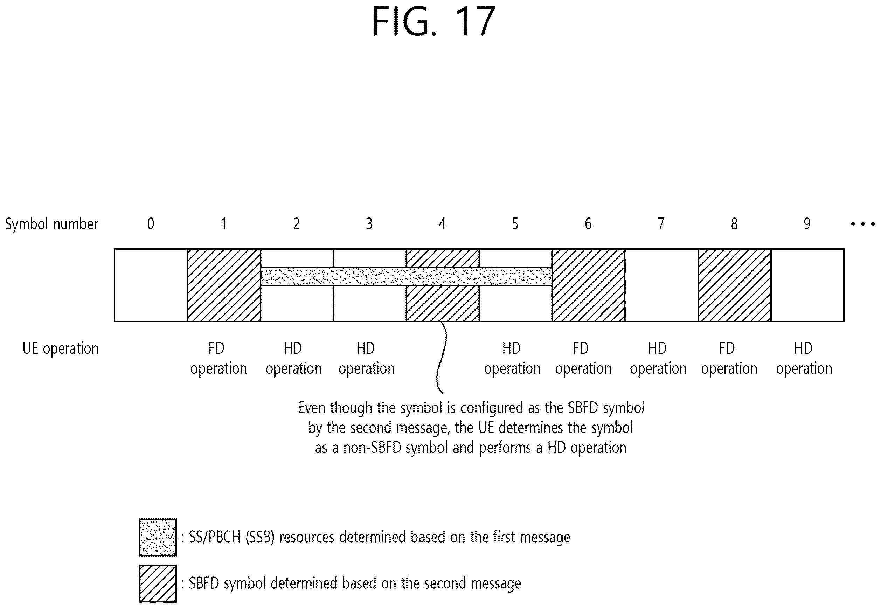

Fig. 17 shows an example in which the FD operation of a UE is restricted in downlink reception resources according to the method of Fig. 16.

Referring to FIG. 17, a UE may receive a first message that configures a specific downlink reception resource. For example, the first message may be a message that sets an SS/PBCH resource.

The UE can be informed by the first message that SS/PBCH (SSB) resources are set for symbols #2, 3, 4, and 5 of a specific slot within a specific half frame, for example, in units of multiple frames (or multiple half frames).

Let us assume that the UE receives a second message from the base station indicating full duplex (FD) time resources, so that it can know that, for example, symbols #1, 4, 6, and 8 of each slot are set as SBFD symbols for a specific slot duration. And let us assume that symbols #1, 4, 6, and 8 of each slot are included in the symbols configured as downlink symbols or flexible symbols by the TDD configuration message.

In this case, in symbols #1, 6, and 8 of each slot within the specific slot duration, the UE can perform an FD operation (e.g., an SBFD operation) without any special restrictions. On the other hand, symbol #4 is a symbol including SS/PBCH resources, so there is a restriction that the UE cannot perform an SBFD operation, and the UE performs an HD operation, specifically, a wideband downlink reception operation.

According to the method of the present disclosure, when an SBFD symbol is set periodically and an SS/PBCH is transmitted by a base station/network in the symbol (or when CORESET #0 is transmitted, when a signal for a specific measurement should be transmitted, etc.), the UE processes the symbol as a non-SBFD symbol and performs only a wideband downlink reception operation, thereby enabling the UE to stably perform reception of the SS/PBCH and preventing ambiguity in operation between the base station and the UE.

In other words, among the periodically set FD time resources, an FD time resource that includes a resource for a specific downlink reception is determined/regarded as a non-FD time resource even though it is set as an FD time resource, and the UE operates based on this (e.g., wideband downlink reception operation).

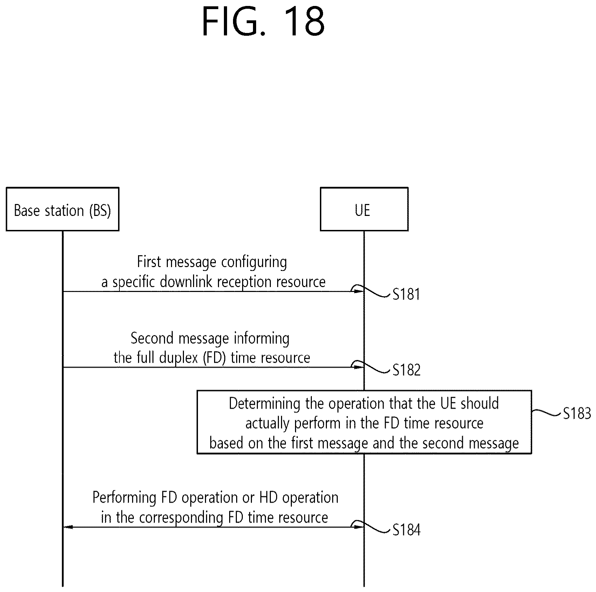

FIG. 18 illustrates signaling and operation between a base station and a UE.

Referring to FIG. 18, the base station transmits a first message configuring a specific downlink reception resource to the UE (S181).

The base station transmits a second message informing the UE of the FD time resource (S182).

The UE determines the operation that the UE should actually perform in the FD time resource based on the first message and the second message (S183).

For example, if a resource for receiving an SS/PBCH configured by a first message is set as an FD time resource by a second message, the UE may regard/determine the FD time resource corresponding to the resource for receiving the SS/PBCH as a non-FD time resource, and perform only a wideband downlink reception operation among a wideband uplink transmission operation, a wideband downlink reception operation, a subband uplink transmission operation, and a subband downlink reception operation. If a resource other than the resource set by the first message is set as an FD time resource by the second message, the UE can perform the FD operation.

The base station and UE perform FD operation or HD operation (wideband downlink reception operation) in the corresponding FD time resource (S184).

Although not shown in FIG. 18, the base station may transmit a TDD (time division duplex) configuration message to the UE. In this case, the FD time resources may be included in symbols configured as downlink symbols or flexible symbols by the TDD configuration message. The TDD configuration message may be, for example, at least one of the configuration messages described in Tables 5 and 6 described above.

<Section 5.2. Restrictions on SBFD operation of UEs in UL reception resources>

In the case of a symbol in which a PRACH is transmitted, if the symbol operates as an SBFD symbol, DL transmission transmitted by the base station or another base station may operate as interference when the base station receives the PRACH.

Alternatively, the UE may need to transmit a PRACH, but the DL signal/channel is scheduled on that symbol, making it difficult for the UE to transmit the PRACH. Considering this, SBFD operation on resources where PRACHs can be transmitted needs to be restricted to ensure that the UE transmits PRACHs when required and that the base station receives them reliably.

Against this background, the present disclosure proposes to restrict and apply the SBFD operation of a UE to specific UL transmission resources (e.g., symbols included in a RACH occasion).

According to the present disclosure, for symbols included in UL transmission resources to which the SBFD operation of the UE is restricted and applied as described above or symbols within a slot including the UL transmission resources, the UE can operate as follows.

### Method 1.

The UE determines that the symbol is a symbol that does not operate as SBFD (hereinafter referred to as a non-SBFD symbol), even if the symbol is set as an SBFD symbol by the network configurations. Therefore, the UE operates in such a symbol as in the existing TDD.

### Method 2.

The UE determines that it only performs wideband UL operation for the corresponding symbol if the symbol is set as an SBFD symbol by network configurations. To this end, at least one of the following methods Alt a to Alt c may be used.

Alt a. The UE always determines that it is performing wideband UL operation regardless of the operation of the UE indicated for the symbol and performs wideband UL operation.

Alt b. The UE assumes that the network does not indicate wideband DL operation, subband DL operation, or subband UL operation for the given symbol.

Alt c. If the wideband DL operation or the subband DL operation is indicated for the symbol, or if it determines that the DL operation is to be performed, the UE does not perform DL reception for the symbol. If the wideband UL operation or the subband UL operation is indicated for the symbol, or if it determines that the UL operation is to be performed, the UE determines that the wideband UL operation is to be performed and performs the wideband UL operation.

### Method 3.

The UE determines that it performs only the subband UL operation or the wideband DL operation for the corresponding symbol, if the symbol is set as an SBFD symbol by the network configurations. To this end, at least one of the following methods Alt a to Alt c may be used.

Alt a. The UE determines that it performs only wideband UL operation or subband UL operation in the corresponding symbol.

Additionally, if it is indicated to perform a wideband operation, the UE determines that it will perform a wideband UL operation in the corresponding symbol and operates. If it is indicated to perform a subband operation, the UE determines that it will perform a subband UL operation in the corresponding symbol and operates.

Or, additionally, if wideband DL operation is indicated, the UE determines that wideband UL operation is performed in the corresponding symbol and operates. If subband DL operation is indicated, the UE determines that subband UL operation is performed in the corresponding symbol and operates.

Alt b. The UE assumes that the network does not instruct the UE to perform wideband DL operation or subband DL operation for the corresponding symbol. Or, the UE determines that the network does not instruct the UE to perform DL operation for the corresponding symbol.

Alt c. The UE does not perform DL reception for the symbol if wideband DL operation or subband DL operation is indicated for the symbol, or if it determines that a DL operation is to be performed.

Additionally, the UE determines that it cannot operate in DL for the preceding N symbols for the symbol included in the UL transmission resources to which the SBFD operation of the UE is restricted as described above. Alternatively, the UE determines that the symbols preceding the N symbols can operate as DL for the symbol included in the UL transmission resources to which the SBFD operation of the UE is restricted as described above.

To this end, specifically, for the N symbols preceding the symbols included in the UL transmission resources to which the SBFD operation of the UE is applied by restricting it as described above, the following operation can be performed.

### Method 1.

The UE determines that it performs only subband UL operation or wideband UL operation on those symbols.

Additionally, if it is indicated to perform a wideband operation, the UE determines that it will perform a wideband UL operation in the corresponding symbol, and if it is indicated to perform a subband operation, the UE determines that it will perform a subband UL operation in the corresponding symbol.

Or, additionally, if a wideband DL operation is indicated, the UE determines that it will perform a wideband UL operation in the corresponding symbol, and if a subband DL operation is indicated to be performed, the UE determines that it will perform a subband UL operation in the corresponding symbol.

Based on the above determination, the UE performs subband UL operation or wideband UL operation in the corresponding symbol.

### Method 2.

The UE assumes that the network does not instruct the UE to perform wideband DL operation or subband DL operation for the corresponding symbols. Or the UE determines that it is not indicated to operate as DL for that symbol.

Based on the above determination, the UE performs subband UL operation or wideband UL operation in the corresponding symbol.

### Method 3.

The UE does not perform DL transmission in the symbol if wideband UL operation or subband DL operation is indicated for the symbol, or if it determines that DL operation is to be performed.

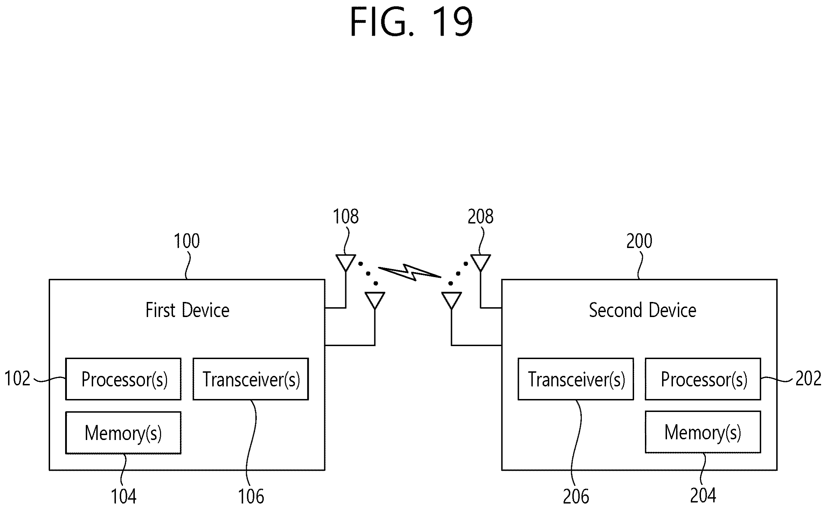

FIG. 19 illustrates a wireless device applicable to the present specification.

Referring to FIG. 19, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. The processor 102 receives a first message configuring a specific downlink reception resource, receives a second message informing full duplex (FD) time resources and performs an FD operation based on the first message and the second message. Based on the specific downlink reception resource being configured as an FD time resource by the second message, the UE determines the specific downlink reception resource as a non-FD time resource that does not perform the FD operation, and performs an operation based on the determination.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 transmits a first message configuring a specific downlink reception resource to a user equipment (UE), transmits a second message informing full duplex (FD) time resources to the UE and performs an FD operation with the UE based on the first message and the second message. Based on the specific downlink reception resource being configured as an FD time resource by the second message, the base station does not perform the FD operation with the UE in the specific downlink reception resource.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: receiving a first message configuring a specific downlink reception resource, receiving a second message informing full duplex (FD) time resources and performing an FD operation based on the first message and the second message. Based on the specific downlink reception resource being configured as an FD time resource by the second message, the UE determines the specific downlink reception resource as a non-FD time resource that does not perform the FD operation, and performs an operation based on the determination.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

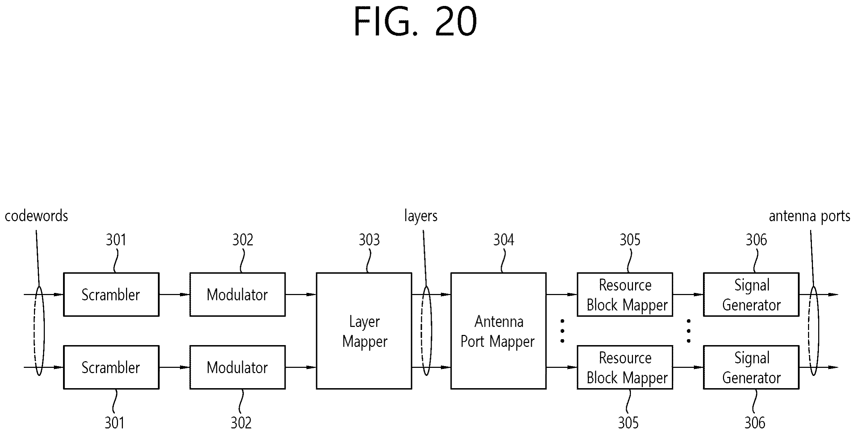

FIG. 20 shows an example of a structure of a signal processing module. Herein, signal processing may be performed in the processors 102 and 202 of FIG. 19.

Referring to FIG. 20, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

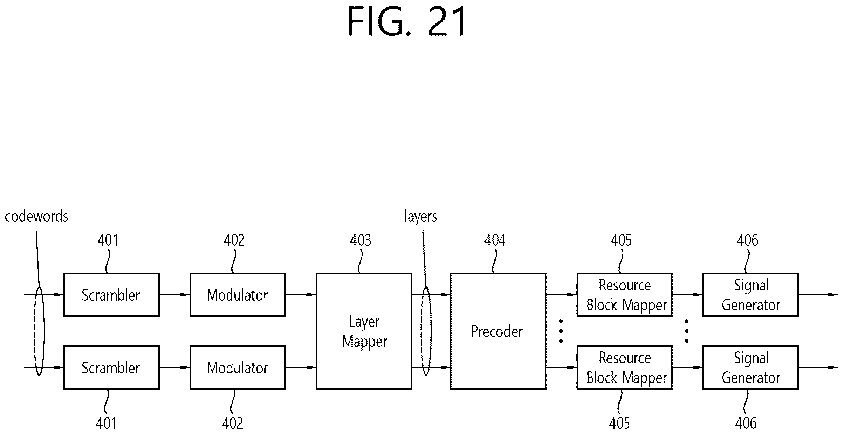

FIG. 21 shows another example of a structure of a signal processing module in a transmitting device. Herein, signal processing may be performed in a processor of a UE/BS, such as the processors 102 and 202 of FIG. 19.

Referring to FIG. 21, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

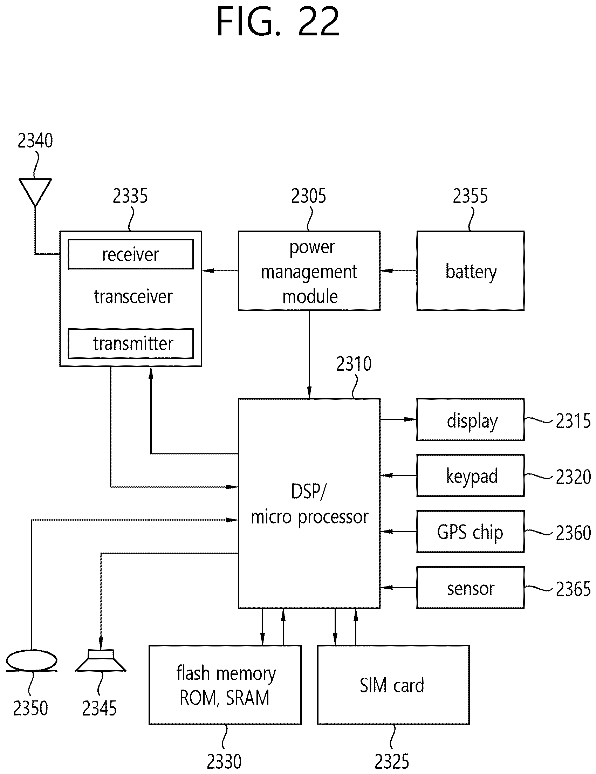

FIG. 22 illustrates an example of a wireless communication device according to an implementation example of the present disclosure.

Referring to FIG. 22, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 22 may be the processors 102 and 202 in FIG. 19.

The memory 2330 is connected to the processor 2310 and stores information related to operations of the processor. The memory may be located inside or outside the processor and connected to the processor through various techniques such as wired connection and wireless connection. The memory 2330 in FIG. 22 may be the memories 104 and 204 in FIG. 19.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

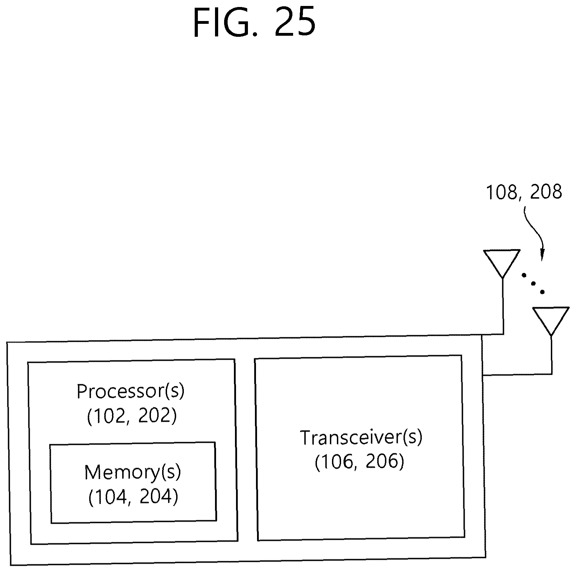

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 22 may be the transceivers 106 and 206 in FIG. 25.

Although not shown in FIG. 22, various components such as a camera and a universal serial bus (USB) port may be additionally included in the UE. For example, the camera may be connected to the processor 2310.

FIG. 22 is an example of implementation with respect to the UE and implementation examples of the present disclosure are not limited thereto. The UE need not essentially include all the components shown in FIG. 22. That is, some of the components, for example, the keypad 2320, the GPS chip 2360, the sensor 2365 and the SIM card 2325 may not be essential components. In this case, they may not be included in the UE.

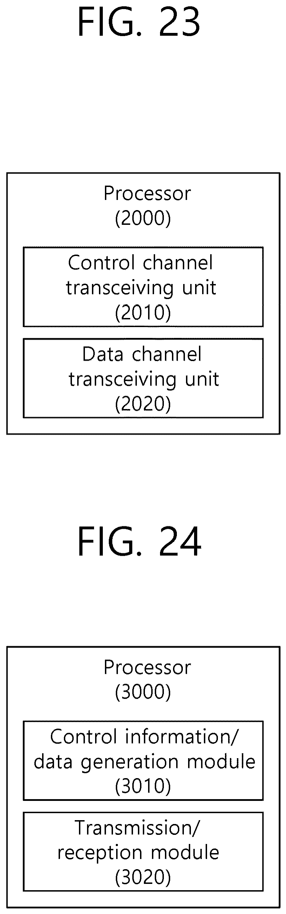

FIG. 23 shows an example of the processor 2000.

Referring to FIG. 23, The processor 2000 may include a control channel transceiver 2010 and a data channel transceiver 2020. For example, the processor 2000 may execute the methods described in FIGS. 16 to 22 from the UE perspective. The processor 2000 may be an example of the processors 102 and 202 of FIG. 19.

FIG. 24 shows an example of the processor 3000.

Referring to FIG. 24, The processor 3000 may include a control information/data generation module 3010 and a transmit/receive module 3020. The processor 3000 may execute the methods described in FIGS 16 to 22, for example, from the perspective of a base station or network. The processor 3000 may be an example of the processors 102, 202 of FIG. 19.

FIG. 25 shows another example of a wireless device.

Referring to FIG. 25, the wireless device may include one or more processors 102 and 202, one or more memories 104 and 204, one or more transceivers 106 and 206 and one or more antennas 108 and 208.

The example of the wireless device described in FIG. 25 is different from the example of the wireless described in FIG. 19 in that the processors 102 and 202 and the memories 104 and 204 are separated in FIG. 19 whereas the memories 104 and 204 are included in the processors 102 and 202 in the example of FIG. 25. That is, the processor and the memory may constitute one chipset.

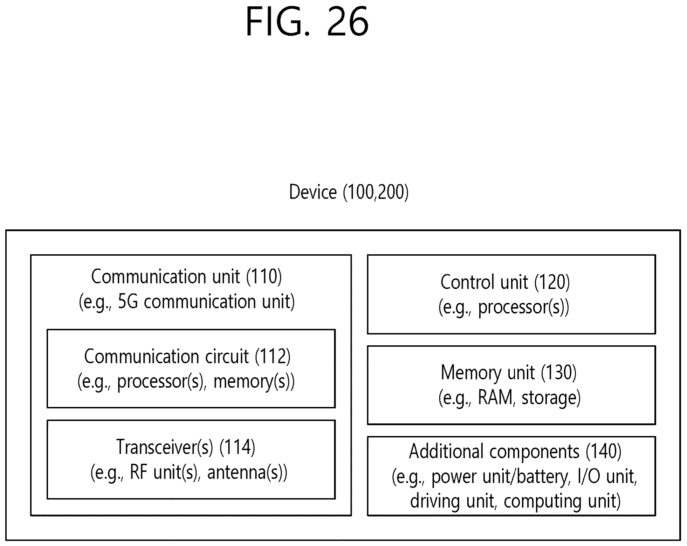

FIG. 26 shows another example of a wireless device applied to the present specification. The wireless device may be implemented in various forms according to a use-case/service.

Referring to FIG. 26, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 26, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and nonvolatile memory. volatile memory) and/or a combination thereof.

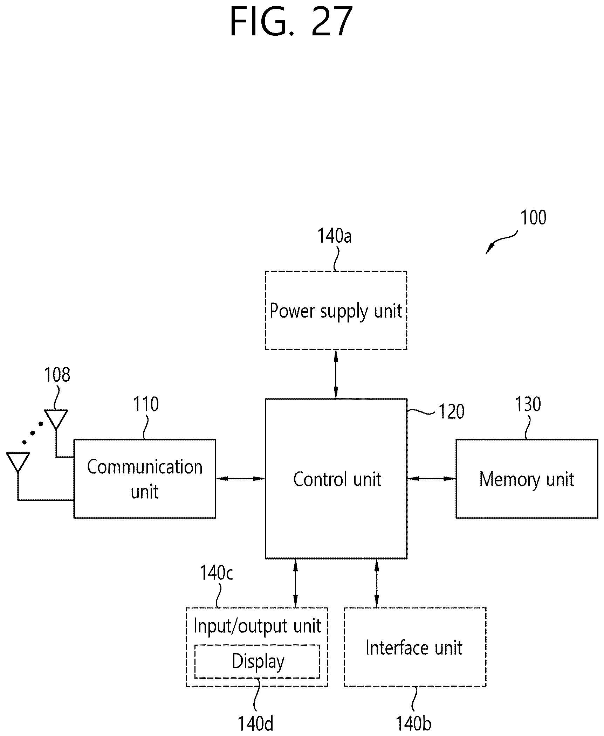

FIG. 27 shows a hand-held device to which this specification applies is exemplified. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 27, the portable device (100) may include an antenna unit (108), a communication unit (110), a control unit (120), a memory unit (130), a power supply unit (140a), an interface unit (140b), and an input/output unit (140c). The antenna unit (108) may be configured as a part of the communication unit (110). Blocks 110 to 130/140a to 140c correspond to blocks 110 to 130/140 of FIG. 26, respectively.

The communication unit (110) can transmit and receive signals (e.g., data, control signals, etc.) with other wireless devices and base stations. The control unit (120) can control components of the portable device (100) to perform various operations. The control unit (120) can include an AP (Application Processor). The memory unit (130) can store data/parameters/programs/codes/commands required for operating the portable device (100). In addition, the memory unit (130) can store input/output data/information, etc. The power supply unit (140a) supplies power to the portable device (100) and can include a wired/wireless charging circuit, a battery, etc. The interface unit (140b) can support connection between the portable device (100) and other external devices. The interface unit (140b) can include various ports (e.g., audio input/output ports, video input/output ports) for connection with external devices. The input/output unit (140c) can input or output image information/signals, audio information/signals, data, and/or information input from a user. The input/output unit (140c) can include a camera, a microphone, a user input unit, a display unit (140d), a speaker, and/or a haptic module.

For example, in the case of data communication, the input/output unit (140c) obtains information/signals (e.g., touch, text, voice, image, video) input by the user, and the obtained information/signals can be stored in the memory unit (130). The communication unit (110) converts the information/signals stored in the memory into wireless signals, and can directly transmit the converted wireless signals to other wireless devices or to a base station. In addition, the communication unit (110) can receive wireless signals from other wireless devices or base stations, and then restore the received wireless signals to the original information/signals. The restored information/signals can be stored in the memory unit (130) and then output in various forms (e.g., text, voice, image, video, haptic) through the input/output unit (140c).

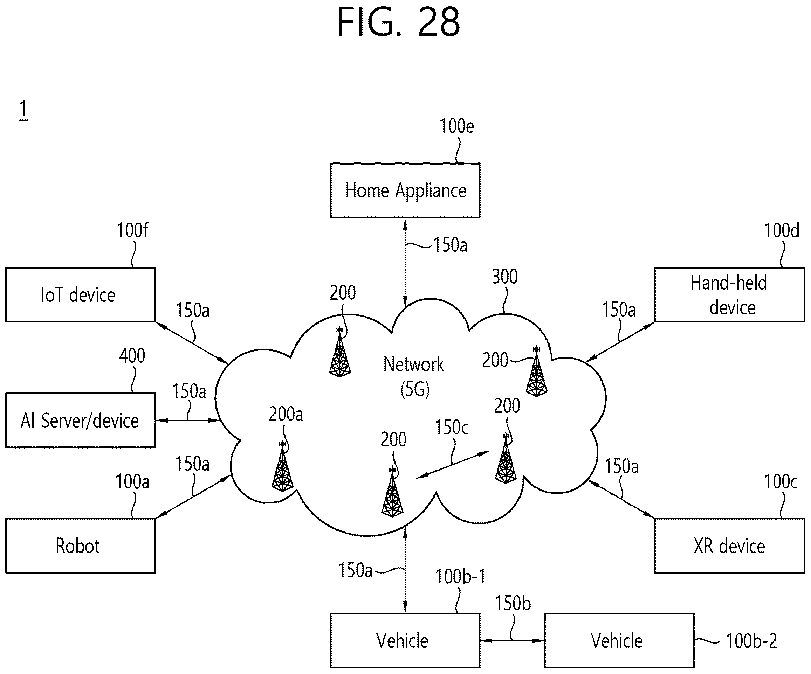

FIG. 28 illustrates a communication system 1 applied to the present specification.

Referring to FIG. 28, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 8. For convenience of explanation, among the frequency ranges that are used in an NR system, FR1 may mean a "sub 6GHz range", and FR2 may mean an "above 6GHz range" and may also be referred to as a millimeter wave (mmW).

**[Table 8]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 9 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

**[Table 9]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method of operating a user equipment (UE) in a wireless communication system, the method comprising:
receiving a first message configuring a specific downlink reception resource;
receiving a second message informing full duplex (FD) time resources; and
performing an FD operation based on the first message and the second message,
wherein, based on the specific downlink reception resource being configured as an FD time resource by the second message, the UE determines the specific downlink reception resource as a non-FD time resource that does not perform the FD operation.

2. The method of claim 1, wherein the specific downlink reception resource is a symbol for receiving a synchronization signal/physical broadcast channel (SS/PBCH).

3. The method of claim 1, wherein the specific downlink reception resource is a symbol receiving CORESET #0.

4. The method of claim 1, wherein the specific downlink reception resource is a symbol for performing a specific measurement.

5. The method of claim 1, wherein the FD operation includes at least one of i) a subband downlink reception operation capable of performing downlink reception in a downlink subband and ii) a subband uplink transmission operation capable of performing uplink transmission in an uplink subband.

6. The method of claim 1, wherein a wideband downlink reception operation capable of performing downlink reception over the entire system bandwidth is performed in the non-FD time resource.

7. The method of claim 6, wherein the UE does not expect that i) a subband downlink reception operation capable of performing downlink reception in a downlink subband, ii) a subband uplink transmission operation capable of performing uplink transmission in an uplink subband, and iii) a wideband uplink transmission operation capable of performing uplink transmission in the entire system bandwidth are indicated for the non-FD time resource.

8. The method of claim 6, wherein based on i) a subband uplink transmission operation capable of performing uplink transmission in an uplink subband or ii) a wideband uplink transmission operation capable of performing uplink transmission in the entire system bandwidth being indicated for the non-FD time resource, the UE does not perform uplink transmission in the non-FD time resource.

9. The method of claim 6, wherein based on a wideband downlink reception operation or a subband downlink reception operation capable of performing downlink reception in a downlink subband being indicated for the non-FD time resource, the UE performs the wideband downlink reception operation.

10. The method of claim 1, wherein the UE always performs a wideband downlink reception operation capable of performing downlink reception over the entire system bandwidth, regardless of an operation indicated for the non-FD time resource.

11. The method of claim 1, further comprising:
receiving a time division duplex (TDD) configuration message, wherein the FD time resources are included in symbols configured as downlink symbols or flexible symbols by the TDD configuration message.

12. A user equipment (UE), comprising:
at least one transceiver;
at least one memory; and
at least one processor operably coupled to the at least one memory and the at least one transceiver, wherein the at least one processor is adapted to:
receive a first message configuring a specific downlink reception resource;
receive a second message informing full duplex (FD) time resources; and
perform an FD operation based on the first message and the second message,
wherein, based on the specific downlink reception resource being configured as an FD time resource by the second message, the UE determines the specific downlink reception resource as a non-FD time resource that does not perform the FD operation.

13. An apparatus of a user equipment (UE), the apparatus comprising:
at least one memory; and
at least one processor operably coupled to the at least one memory,
wherein the at least one processor is adapted to:
receive a first message configuring a specific downlink reception resource;
receive a second message informing full duplex (FD) time resources; and
perform an FD operation based on the first message and the second message,
wherein, based on the specific downlink reception resource being configured as an FD time resource by the second message, the UE determines the specific downlink reception resource as a non-FD time resource that does not perform the FD operation.

14. At least one computer readable medium (CRM) having instructions to be executed by at least one processor to perform operations includes:
receiving a first message configuring a specific downlink reception resource;
receiving a second message informing full duplex (FD) time resources; and
performing an FD operation based on the first message and the second message,
wherein, based on the specific downlink reception resource being configured as an FD time resource by the second message, the UE determines the specific downlink reception resource as a non-FD time resource that does not perform the FD operation.

15. A method of operating a base station in a wireless communication system, the method comprising:
transmitting a first message configuring a specific downlink reception resource to a user equipment (UE);
transmitting a second message informing full duplex (FD) time resources to the UE; and
performing an FD operation with the UE based on the first message and the second message,
wherein, based on the specific downlink reception resource being configured as an FD time resource by the second message, the base station does not perform the FD operation with the UE in the specific downlink reception resource.

16. A base station, comprising:
at least one transceiver;
at least one memory; and
at least one processor operably coupled to the at least one memory and the at least one transceiver, wherein the at least one processor is adapted to:
transmit a first message configuring a specific downlink reception resource to a user equipment (UE);
transmit a second message informing full duplex (FD) time resources to the UE; and
perform an FD operation with the UE based on the first message and the second message,
wherein, based on the specific downlink reception resource being configured as an FD time resource by the second message, the base station does not perform the FD operation with the UE in the specific downlink reception resource.
